(19) Europäisches Patentamt / European Patent Office / Office européen des brevets

(11) **EP 2 350 947 B1**

(12) **EUROPEAN PATENT SPECIFICATION**

(45) Date of publication and mention
of the grant of the patent:
**27.01.2016 Bulletin 2016/04**

(21) Application number: **08875011.2**

(22) Date of filing: **07.11.2008**

(51) Int Cl.:
**G06Q 30/00** *(2012.01)*

(86) International application number:
**PCT/EP2008/009431**

(87) International publication number:
**WO 2010/034336 (01.04.2010 Gazette 2010/13)**

(54) **PROVISIONING OF CONTENT ITEMS IN MOBILE COMMUNICATIONS NETWORKS**

BEREITSTELLUNG VON INHALTSPOSTEN IN MOBILKOMMUNIKATIONSNETZEN

FOURNITURE D'ARTICLES DE CONTENU DANS DES RÉSEAUX DE COMMUNICATION MOBILE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **24.09.2008 PCT/EP2008/062799**

(43) Date of publication of application:
**03.08.2011 Bulletin 2011/31**

(73) Proprietor: **Telefonaktiebolaget L M Ericsson (publ)**
**164 83 Stockholm (SE)**

(72) Inventor: **QUINN, Karl**
**Dublin D14 (IE)**

(74) Representative: **Brann AB**
**P.O. Box 12246**
**102 26 Stockholm (SE)**

(56) References cited:
**US-A1- 2006 282 328     US-A1- 2008 104 225**
**US-A1- 2008 215 428**

## Description

## Technical field

The invention relates to the provisioning of content items, for example advertisements, in mobile communications networks. More specifically, the invention relates to targeting techniques for controlling the provisioning of such content items to users in a mobile communications network.

## Background

In the popular and widespread Internet, an increasing number of services aim at providing content to an "open circle" of users which have not explicitly requested that particular content. A typical example is the placement of advertisements (ads) on web pages. Another example is a news service aiming at providing news of particular interest to users on web pages or as a newsletter via email push. Still another example is the provision of invitations or announcements in a business, public or private environment; consider, e.g. an invitation to an upcoming cultural event which shall be distributed via email to all interested people in a town.

A common characteristic to the above examples is that it is not possible to define in advance the users who may be interested in the content: In general, a user requesting a web page from, e.g., a search engine or a user being registered with its email address in a social network such as Facebook or MySpace may or may not be interested in receiving a particular advertisement, news or invitation. In case of business-related content distributions, however, a service provider will generally want to provide a personalized service, i.e. wants to target the provision of any particular content item to users who are actually interested in it.

Such targeting is also an important aspect from a network perspective: As untargeted advertisement emails, for example, require the largest available distribution list in order to eventually reach at least few interested users, such emails - widely known as spam - lead to considerable network load and crowded mail boxes. As the overwhelming majority of recipients is not interested in the ads, this leads to a waste of network and storage resources. In a mobile network environment, transmission resources over the radio interface as well as storage resources in mobile terminals are particularly limited; untargeted content distribution services definitively have to be avoided here.

In order to generally enable the provision of "open circle" services such as that exemplarily outlined above, efficient targeting mechanisms are required which allow selecting from a large group of users those who have a high likelihood of being interested in the content. In the advertisement field, companies such as Google and many others are highly involved in developing efficient targeting schemes. Such schemes will be of particular importance for mobile networks, as otherwise open circle services cannot be implemented therein from a practical point of view. Vice versa, provision of an efficient automatic targeting scheme for unrequested content items by a mobile network operator can lead to an improved usefulness of mobile networks for the users and improved benefits for the content providers.

Documents US 2008 214428 and US 2006 282328 disclose targeting advertisements on the basis of the user's contacts.

## Summary

There is a demand for a targeting scheme for a provision of content items to users in mobile communications networks, which is efficient in terms of transmission resource usage in the network and storage resource usage in the network and/or the mobile terminals.

This demand is satisfied by a method, a computer readable medium and a provisioning server according to claims 1, 13 and 14, respectively. At least one of the first user and the second user may be a mobile subscriber of the mobile communications network. In one implementation of the method, the user-related database comprises a subscriber-related database associated with the mobile communications network. In this case, the subscriber-related database may, for example, comprise a call data record (CDR) database of the mobile communications network. Such a CDR database may be provided for recording past calls of the first subscriber. Additionally or alternatively, the user-related database may comprise a community database containing user profiles of users of a social network. A social network is a communications network comprising at least multiple user profiles and social network service functions for interrelating the user profiles. An example of a service function is a search function for searching users of the social network according to one or more user profile parameters. The social network may be separate from the mobile communications network.

According to some realizations of the above method, the intended presentation area for the selected content item is selected from one of multiple overlapping areas with different geographical extensions. In one realization, the overlapping areas comprise at least a micro area and a macro area, and the micro area has a smaller geographical extension than the macro area. In an implementation of this realization content items intended for presentation in the micro area are cached in a local repository in a network portion of the mobile communications network associated with the micro area and content items intended for presentation in the macro area are cached in a central repository of the mobile communications network. The step of initiating the presentation of the selected content item may then comprise initiating retrieval of the selected content item from the local repository or central repository dependent on the intended presentation area of the selected content item.

Some implementations of the above method comprise in the provisioning server the step of retrieving information related to the selected content items for determining the social network click-through rate from the local repository or central repository dependent on the intended presentation area of the selected content item.

In one implementation, the retrieval component of the provisioning server is adapted to retrieve the contact information from a subscriber-related database associated with the mobile communications network. According to some variants of this implementation, the retrieval component is adapted to retrieve the contact information from a call data record database of the mobile communications network.

According to some realizations of the provisioning server, the selection component is adapted to initiate retrieval of the selected content item from a local repository or a central repository dependent on the intended presentation area of the selected content item.

Eventually the above-mentioned demand is satisfied by a mobile communications network comprising a provisioning server and one or more repositories as outlined above. The provisioning server may be co-located with one or more of the repositories, or may be co-located with a control node in a radio access part of the mobile communications network, e.g. a Radio Base Station, or may be a stand-alone entity.

**Brief Description of the Drawings**

In the following, the invention will further be described with reference to exemplary embodiments illustrated in the figures, in which:

Fig. 1     schematically illustrates an embodiment of a mobile communications network adapted for a provisioning of content items;

Fig. 2     is a functional block diagram illustrating an embodiment of the provisioning server of Fig. 1;

Fig. 3     is a functional block diagram illustrating an embodiment of the content repository of Fig. 1;

Fig. 4     illustrates a data input to an operation of the network of Fig. 1;

Fig. 5     schematically illustrates a content item presentation on a screen of a mobile terminal;

Fig. 6     is a flow diagram illustrating a first operation of the network of Fig. 1;

Fig. 7     is a flow diagram illustrating a second operation of the network of Fig. 1;

Fig. 8     is a flow diagram illustrating a third operation of the network of Fig. 1;

Fig. 9     schematically illustrates a social network of a user of the network of Fig. 1; and

Fig. 10    is a flow diagram illustrating an operation of the repository of Fig. 3.

**Detailed Description**

In the following description, for purposes of explanation and not limitation, specific details are set forth with regard to an advertisement provisioning system in a mobile communications network in order to provide a thorough understanding of the current invention. It will be apparent to one skilled in the art that the current invention may be practiced in other embodiments that depart from these specific aspects. For example, the skilled artisan will appreciate that the current invention may be implemented for any service aiming at the provision of personalized content items such as news, announcements or offerings. Further, the techniques proposed herein may be implemented in any communications network including the general Internet, intranets of companies, etc. based on wireless and/or wireline network technologies.

Those skilled in the art will further appreciate that functions explained hereinbelow may be implemented using individual hardware circuitry, but also using software functioning in conjunction with a programmed microprocessor, field-programmable gate array (FPGA), application specific integrated circuit (ASIC), one or more digital signal processors (DSPs) or a general purpose processor. It will also be appreciated that when the current invention is described as a method, it may also be embodied in a computer processor and a memory coupled to the processor, wherein the memory is encoded with one or more programs that perform the methods disclosed herein when executed by the processor.

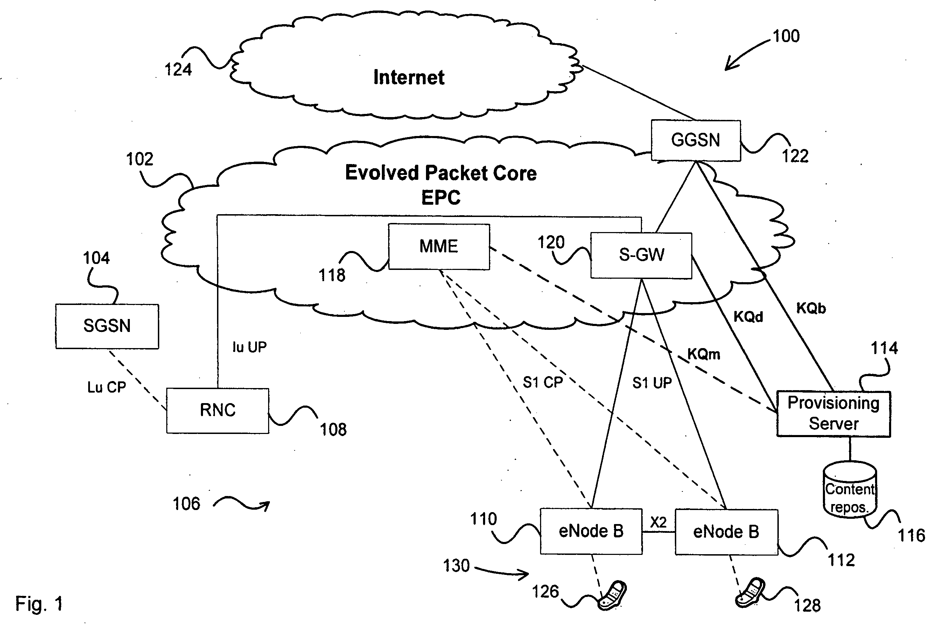

Fig. 1 illustrates an embodiment of a mobile communications network 100 realized as an UMTS LTE (Long Term Evolution) network comprising an EPC (Evolved Packet Core) 102, a PS domain represented by an SGSN (Serving GPRS Support Node) 104 and a radio access part 106 comprising an RNC (Radio Network Controller) 108, eNode Bs (radio base stations) 110 and 112, a provisioning server 114 and a content repository for caching content items termed RnCN (Radio network Caching Node) 116. The core network 102 comprises an MME (Mobility Management Entity) 118 and a S-GW (Serving Gateway) 120. A GGSN (Gateway GPRS Support Node) 122 connects network 100 to the general Internet 124. The mobile communications network 100 operates to provide content items, in particular advertisements, to mobile users such as the users of mobile terminals 126 and 128. A flow of information between some of the components in a Control Plane (CP) or a User Plane (UP) is additionally illustrated in Fig. 1 by solid or dashed connecting lines.

While the provisioning server 114 is illustrated as being co-located with the content repository 116 in Fig. 1, in other embodiments a provisioning server may be co-located with a BSS (Base Station Subsystem) or OSS (Operating Station System). The provisioning server 114 and content repository 116, while being connected with the MME 116 and S-GW 118, may also be located close to the GGSN 122 serving as a gateway to the Internet 124, and may thus be located close to the edge of the LTE network 100. This configuration enables that content items such as advertisements, but also web-pages received from content providers in the Internet 124 may be efficiently cached close to the users 126 and 128. Moreover, the nodes 114 and/or 116 may monitor efficiently which content items are served to the users 126 and 128 and what is the Click-Through Rate (CTR) for a particular content item. The repository 116 is employed as a local repository for content items intended for presentation in at least a part of the micro area 130 formed by the geographical area which is served by the eNode Bs 110 and 112. For example, micro area 130 may cover the area of a city. In other embodiments, the repository 116 may additionally or alternatively be employed as a central repository for a macro area such as a country or similar area with a large geographical extension compared to the micro area 130.

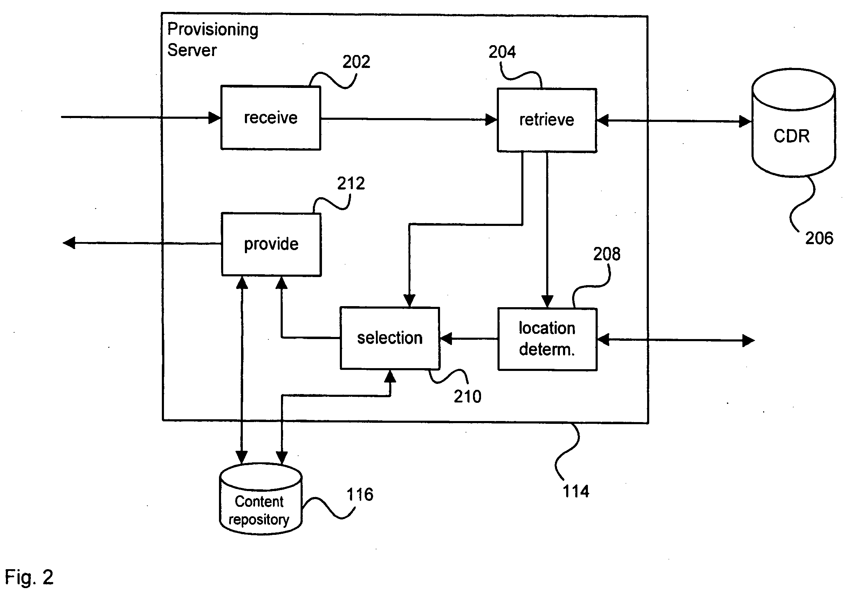

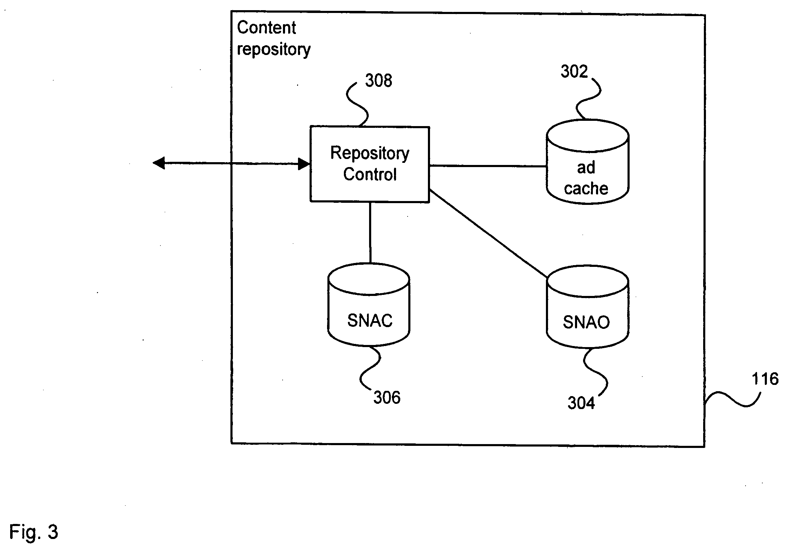

For later reference, functional components of specific embodiments of the provisioning server 114 and content repository 116 are illustrated in Figs. 2 and 3, respectively. Referring to Fig. 2, the provisioning server 114 is illustrated to comprise a reception component 202, a retrieval component 204 adapted for connection with a Call Data Record (CDR) database 206, a location determination component 208, a selection component 210 and a provisioning component 212. Components 210 and 212 are adapted for connection with the content repository 116. The embodiment of the content repository 116 illustrated in Fig. 3 comprises a caching component 302, further user-related storage components 304 and 306 and a provisioning component 308.

The functionality of one or both of the provisioning server 114 and the content repository 116 as illustrated in Figs. 2 and 3 and described below may be implemented in software, i.e. each of the blocks referenced as 114 and 116 in the figures may be understood as comprising a software and/or firmware package for implementation on a general purpose hardware, or on a more specific hardware such as one or more ASICs, FPGAs or DSPs. Each of the provisioning server 114 and the content repository 116 may be implemented on a separate hardware platform. In some embodiments, the provisioning server 114 and the repository 116 are implemented on a common hardware platform.

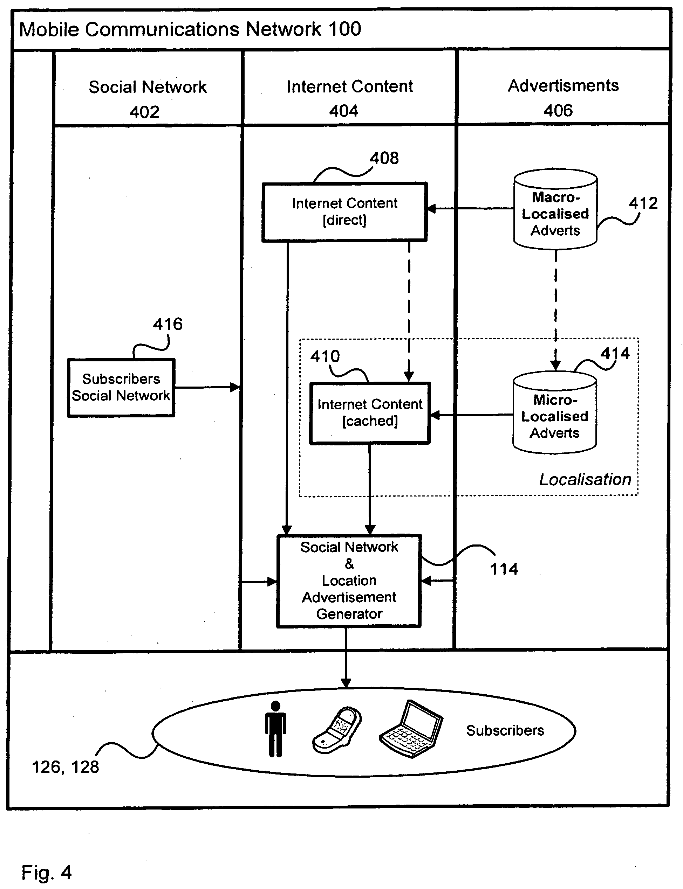

With regard to an operation of the provisioning server 114 and content repository 116 in order to implement an efficient targeting scheme, Fig. 4 illustrates on an abstract level the data which are accounted for when controlling a provisioning of content items to users 126 and 128. Data is used from a social network domain 402, an Internet content domain 404 and an advertisements domain 406. The provisioning server 114 may retrieve Internet content 408 directly from Internet and/or may retrieve cached content 410 from the content repository 116. The Internet content 408, 410 may comprise web page content for rendering on a mobile terminal display of users 126 or 128. Advertisements intended for presentation in a macro area (macro-localised ads 412) and/or advertisements intended for presentation in a micro area (micro-localised ads 414) may further be provided to the users 126 and 128 depending on the targeting scheme to be described below. The decision logic of this scheme requires data related to users or subscribers 416 of one or more social networks in which one or both of users 126 and 128 are involved.

A rough sketch of the processing of the data in Fig. 4 is as follows: In case user 126 clicks on an advertisement presented to him or her, the server 114 operates to determine a social network of user 126 and prepares a presentation of the clicked advertisement to other users of this social network. Upon determination of whether a particular social network user, e.g. user 128, is located within the intended presentation area of the advertisement, the advertisement may selectively be released for presentation to this user. The presentation may then comprise to weave or render the ad into a web page requested by user 128 in a conventional manner.

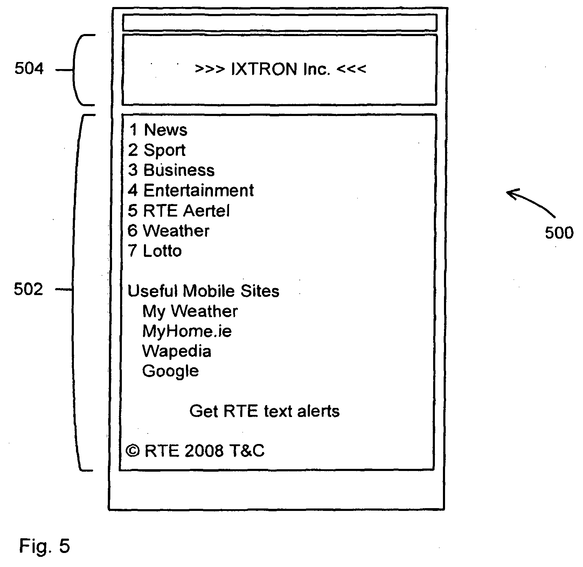

Fig. 5 illustrates a schematic example of a webpage 500 which may have been requested from a user for presentation on a mobile terminal. The page 500 comprises a first page area 502, which is in this example a main menu of a web representation of a company in Ireland. A second page area 504 is provided for a presentation of at least one advertisement. In general, the second page area 504 may be implemented as an advertisement container that may comprise different advertisements when presenting the same webpage 502 to different users, i.e. the second page area 504 may be configured as a placeholder for different advertisements. According to the targeting scheme described herein, a first user clicking on an advertisement presented in the area 504 may trigger that the same advertisement will anonymously be prepared for presentation to second users belonging to the first user's social network. For example, a second user may be presented with the same advertisement although he or she requests a different webpage than shown in the first page area 502 to the first user.

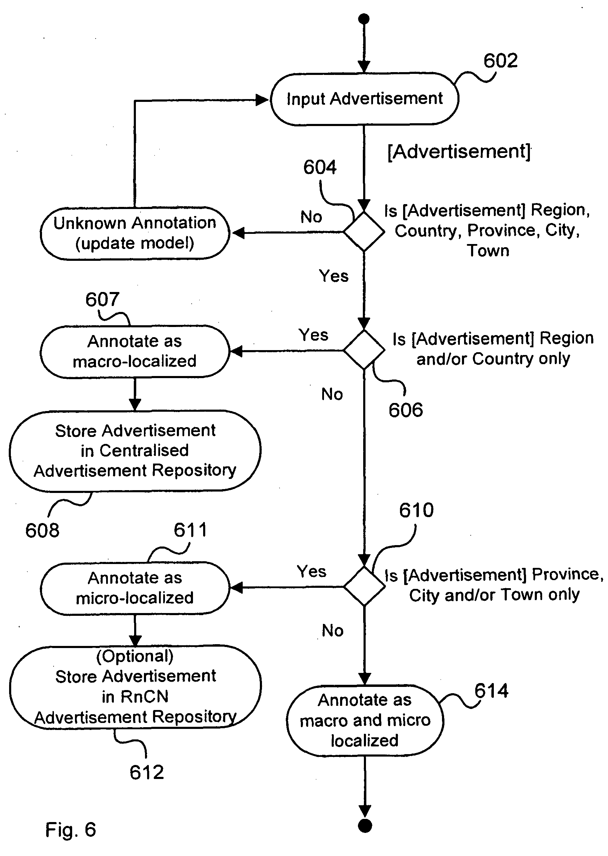

Fig. 6 illustrates an embodiment of a method 600 of preparing advertisements for being provided to users according to the targeting scheme proposed herein. It is to be noted that method 600 works besides advertisements for any kind of content items, e.g. news, announcements, invitations, etc. As a prerequisite for method 600 an advertisement is provided with at least one annotation or tag or similar associated information element indicating an intended presentation area for the advertisement. For example, the intended presentation area may be the area of the city of Dublin. As another example, the intended presentation area may be the area of Ireland. In still another example, multiple keywords may be assigned such as 'Ireland, London'.

The method 600 starts in step 602 with accepting a particular advertisement. In step 604, some error handling is performed by determining whether the intended presentation area is known to the provisioning system. In step 606 it is determined whether the indicated presentation area is a macro area covered at least in part by the mobile network 100. Generally, the provisioning system may classify any intended presentation area according to a type scheme of presentation areas. For reasons of illustration, only two different types of presentation area are defined, namely 'micro area' and 'macro area'. While micro areas may reflect the areas covered by a radio access part such as radio access part 106 in Fig. 1, while a macro area may generally cover several radio access parts, such that content items with intended for presentation in such a macro area may preferably be stored in a central content repository. For example, a micro area may cover the geographical area of a city, province or postal code, while a macro area may cover a country or similar region with a significantly larger extension.

The classification of a particular intended presentation area as 'macro area' may be performed automatically by the provisioning system, e.g. based on the known coverage of the mobile network of the indicated intended presentation area. Alternatively, the classification may be specified manually by the network operator, an advertisement service provider or the advertiser itself.

Referring back to step 606, assuming the intended presentation area is Ireland as known to the provisioning system, the area is classified as macro area and the advertisement is provided to a central advertisement repository of the network 100 in step 608. The step 607 is an optional step of explicitly adding an annotation indicating that the ad is macro-localised thereto. This annotation may be used for distributing the ad.

In case in step 606 it is decided that the intended presentation area is not a macro area, in step 610 it is determined whether the presentation area is a micro area. If this is the case, the advertisement is stored in the corresponding local content repository in step 612. As an example, the ad may have the intended presentation area of the city of Dublin and may thus be stored in the content repository 116 of Fig. 1. The step 611 is an optional step of explicitly adding an annotation indicating that the ad is micro-localised thereto. Advertisements, whose intended presentation area covers only partly a micro area may be sorted out in step 604. A corresponding micro area may accordingly be defined or the intended presentation area may be redefined for that particular ad.

As indicated by step 614, there may also be advertisements comprising macro area(s) and micro area(s) for the intended presentation area. The process of distributing an advertisement intended, for example, for presentation in Ireland and in London to a central content repository for the country of Ireland and a local repository for the city of London works very much as a concatenation of the steps 606 - 612 and a detailed explanation thereof is therefore omitted.

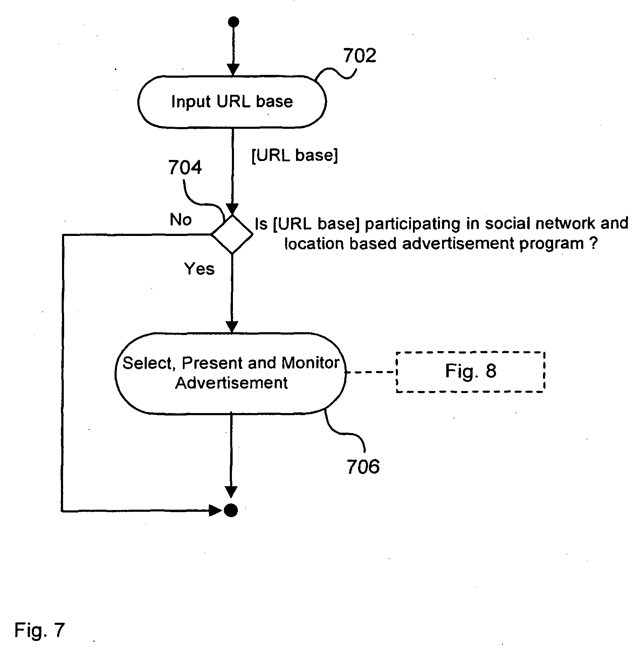

Fig. 7 illustrates a principle of operation for the provisioning of an advertisement to user 126 in Fig. 1. It is assumed that the advertisement is available in the local content repository 116. User 126 may request a webpage by indicating the corresponding URL to the network 100. In step 702, the webpage request is intercepted, for example by an appropriate trigger point in S-GW 120 in the core network 102. The S-GW 120 may deliver the intercepted URL to provisioning server 114. In step 704 it is determined whether the URL matches a list of URLs participating in an advertisement program applying the targeting mechanism as described here. If this is the case, one or more appropriate advertisements may be selected for presentation to the user 126 in step 706, which also comprises monitoring the presentation of the advertisement in order to determine whether the user 126 clicks on the advertisement. The details of step 706 will be described in the following.

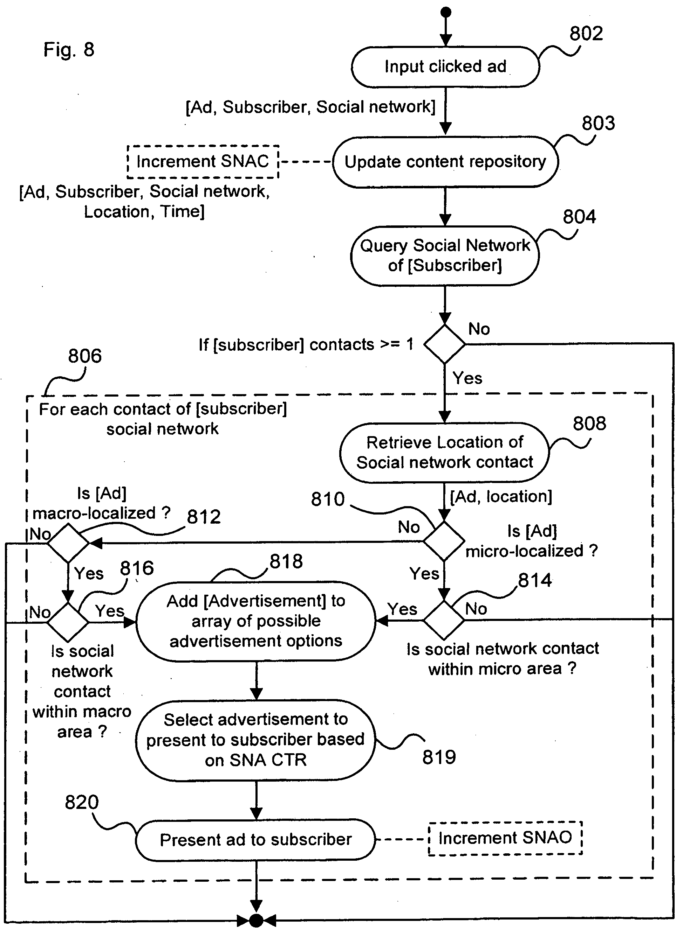

Fig. 8 illustrates an embodiment of a targeting mechanism for controlling a provisioning of advertisements to users in the mobile communications network 100. The method will be described with reference to the provisioning server 114 depicted in Figs. 1 and 2. In step 802, the reception component 202 of provisioning server 114 receives an indication of an advertisement which has been clicked on or otherwise selected by user 126. The reception component 202 forwards an indication of user 126 to the retrieval component 204, for example, an MSISDN or IMSI of the mobile terminal of user 126. In step 804, the retrieval component 204 of provisioning server 114 accesses the user-related database 206 in order to retrieve contact information associated with the user 126. As said already with reference to Fig. 2, the user-related database may be a CDR database which records for each subscriber of the mobile network 100 indications of originating and terminating calls as well as text messages sent and received. The data records include an indication of the other party of the phone call or text message.

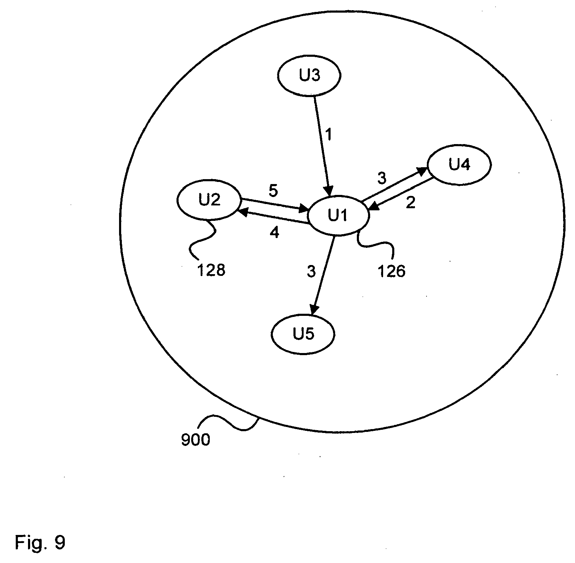

The retrieval component 204 thus may extract indications of other parties from the CDRs relating to user 126. The analysis of the CDRs may be limited to a particular past time period, e.g. two weeks or two months. In this way, the provisioning server 114 may determine (or "construct") a current "social network" of the user 126, i.e. a list of users the user 126 is in communication with, and which therefore may be thought of as belonging to the same social group. Fig. 9 schematically illustrates an example of a social network 900 which may have been determined for user 126 ("U1") in this way from CDR database 206. Various contacts of user U1 are represented as users U2 - U5. For later exemplary reference, the user U2 may be user 128 indicated in Fig. 1. The social network constructed in Fig. 9 also shows the number of incoming/outgoing communications between U1 and the other parties. In order to construct a true social network and/or in order to limit the network to an appropriate size, in some embodiments rare contacts may be disregarded, i.e. a predefined minimum number of communications within the analysis time span may be required in order to be counted as belonging to the social network. As one example, at least 5 incoming or outgoing communications within the last two weeks may be required for a user to be counted as belonging to the social network of U1. In this example, according to Fig. 9 only user U2 would belong to the social network of user U1, as the users U3 - U5 with a number of communications below the predefined number are not counted as members of the social network of U1.

In an alternative embodiment, the step 804 of Fig. 8 comprises to retrieve contact information of other users related to user 126 from a community database containing user profiles of users of a social network separate from the mobile network 100. For example, user 126 may be a member of a social network such as Facebook, MySpace, LinkedIn, Plaxo Pulse etc. and indications of other members may be retrieved based on searching user profile parameters such as age, gender, prefererences etc. similar to those of user 126. In still other embodiments, both possibilities of searching a (CDR) database of the mobile network 100 and a community database of an social network (internal or external to the mobile network 100) are implemented.

Referring back to Figs. 7 and 8, the mechanism illustrated in box 806 will be executed for each of the users U2 - U5 counted as belonging to U1's social network. Assuming that only user U2 is determined as belonging thereto, the retrieval component 204 of provisioning server 114 provides an indication of user U2 (user 128 in Fig. 1) to the location determination component 208 of provisioning server 114 in Fig. 2. The user indication may comprise an IMSI or MSISDN of the mobile terminal of user 128. In step 808, the location determination component 208 operates to determine a location of user 128. Various possibilities exist for determining the current location of the user 128. For example, the provisioning server 114 may request an indication of the current location from the MME 118 (cf. Fig. 1; not indicated in Fig. 2). The MME 118 may in turn trigger a location determination based on techniques known, for example, from the field of location-based services. For example, the mobile terminal of user 128 may be capable of determining its location and may indicate it to the network 100, or the network 100 may determine the location based on measurements performed, e.g., by radio base stations 110 and 112.

In steps 810 - 818, a presentation of the advertisement which has been clicked by user 126 is prepared dependent on whether its intended presentation area covers the current location of the user 128. In steps 810 and 812, it is determined whether the intended presentation area is one of a macro area or a micro area. In other embodiments, the intended presentation could cover various macro areas and/or micro areas. Such complicated configurations can easily be reduced to a combination of the simple mechanisms illustrated in Fig. 8 and are therefore omitted herein for the sake of clarity.

Referring exemplarily to step 810 and assuming that the advertisement clicked by user 126 has an intended presentation (micro) area covering at least partly the area served by base stations 110 and 112, the retrieval component 204 provides the user indication of user 128 to the selection component 210 and the location determination component 208 provides the location of user 128 to the selection component 210, which then operates in step 814 to determine whether the intended presentation area of the clicked advertisement covers the current location of the user 128. The selection component 210 may access the content repository 116 in order to determine the intended presentation area and/or the extra annotation of whether the advertisement is micro-localised or macro-localised. In the example that the intended presentation area is Dublin and the current location of user 128 is in Dublin, in step 818 the clicked advertisement is indicated as an item which may possibly be presented to the user 128 to the provisioning component 212 of the server 114. For example, the indication may comprise an address of a storage place in the repository 116 of the advertisement.

In step 820, the provisioning component 212 operates to present the selected advertisement to user 128 by retrieving it from content repository 116 and sending it towards the user terminal of user 128. The presentation may be triggered by a user 128 request for a webpage, similar as has been described in step 702 for user 126. An advertisement may generally be kept in the content repository as long as it has been presented at least one time to each of the users belonging to the social network of user 126 (or as long as the ad is valid).

The steps 812 and 816 are performed in a similar way as has been described for the steps 810 and 814. For example, in case an advertisement has Ireland as the intended presentation area, the advertisement will be stored in a central content repository of the network 100. In step 816 it is then determined whether the current location of user 128 is in Ireland. In this way, the advertisement clicked by user 126 may be offered to related social network users currently in the same country Ireland than user 126.

In some embodiments, when receiving the indication of the advertisement clicked by user 126 in step 802, additionally the current location of user 126 may be received or determined by the provisioning server 114. In these embodiments, for the general case that the presentation area of an advertisement comprises several micro areas and macro areas (which may or may not overlap with each other), the smallest applicable area may be used in steps 814 and 816, respectively. For example, in case an advertisement has as intended presentation area 'Dublin, Ireland', and user 126 clicks on the advertisement while in Dublin, the advertisement may only presented to social network users also currently located in Dublin. In this way, for example preferred presentation areas can be implemented.

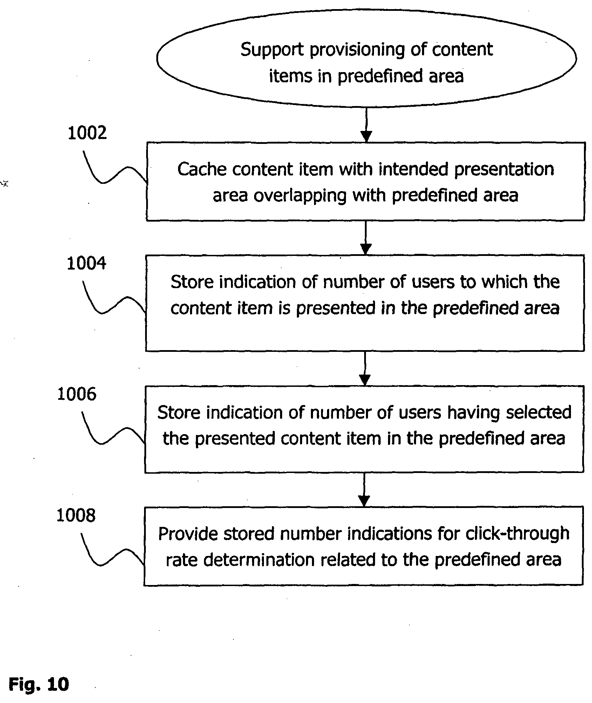

Referring to steps 803, 819 and 820 in Fig. 8, a monitoring mechanism may be implemented in the content repository 116, for example the repository control 308, or the provisioning server 114, for example the selection component 210. This will be described in further detail with reference to the components of the content repository 116 shown in Fig. 3 and the sequence of operational steps depicted in Fig. 10. The repository 116 may be generally adapted for supporting a provisioning of content items such as web pages, advertisements, announcements, news to users in the micro area served by radio base stations 110 and 112. In step 1002, the caching component 302 caches an advertisement with an intended presentation area overlapping with the micro area served by repository 116 (cf. step 612 in Fig. 6).

In step 1004 (see also step 820), an indication of a Social Network Advertisement Offers (SNAO) number is stored in the storage component 304. This number indicates to how many users from the social network of, for example, user 126 the advertisement stored in cache 302 has been presented (within the area served by nodes 110, 112). In step 1006 (see also step 803), an indication of a Social Network Advertisement Clicks (SNAC) number is stored in the storage component 306 in repository 116. This number indicates how many users from the social network of user 126 have actually clicked on (or otherwise selected) the advertisement of cache 302 presented to them.

The SNAO and SNAC numbers may be maintained in the repository 116 throughout the lifetime of the advertisement (or may be reset whenever the social network of a user is newly determined). In step 1008, the control component 308 operates to retrieve the SNAO number from storage 304 and the SNAC number from storage 306 in order to determine a Social Network Advertisement Click-Through Rate SNA CTR as

$$\text{SNA CTR} = \frac{SNAO}{SNAC} \ .$$

The SNA CTR may be used in step 819 for ranking multiple advertisements available for presentation to user 128, i.e. in cases in which more advertisements are available than could be presented to the user.

As an example for the use of the SNA CTR, consider that user 128 is a member of several social networks constructed as described above with reference to Fig. 9. In other words, user 128 will be a contact of user 126, but also other users, e.g. a user X. A first advertisement may be prepared for presentation to user 128 according to the algorithm illustrated in Fig. 8, because user 126 has clicked on the first advertisement. A second advertisement may be prepared for presentation to user 128 because user X has clicked on the second advertisement. In case both advertisements are available for presentation, but only one of these could actually be presented, the advertisement with the highest SNA CTR might then be chosen.

The techniques proposed herein enable the provision of an efficient automatic targeting scheme for content items to users in mobile communications networks. Focusing the presentation of content items to members of a social network of a particular user who has already selected an item increases the general likelihood that this item will be of interest to the users to which it is presented. This allows to avoid usage of transmission and storage resources for content items, which are distributed without focusing, for example without taking into account social relationships and which are therefore generally not of interest to a user. Transmission and storage resources may thus be saved in the network and in mobile terminals.

The proposed techniques to a large extent re-use existing structures in mobile communications networks, e.g. CDR databases, or in the Internet, e.g. community databases of social networks such as Facebook, MySpace, LinkedIn, etc. The targeting mechanisms can therefore be implemented with minor modifications in existing networks.

While the current invention has been described in relation to its preferred embodiments, it is to be understood that this description is for illustrative purposes only. Accordingly, it is intended that the invention be limited only by the scope of the claims appended hereto.

**Claims**

1. A method for controlling a provisioning of content items to users in a mobile communications network, the method being performed by a provisioning server (114)_in the mobile communications network (100) and comprising the following steps:

- receiving (802) an indication of a content item which has been selected by a first user via a first mobile terminal (126);
- retrieving (804), from a user-related database (206) contact information associated with the first user, wherein the contact information indicates at least one second user (128);
- determining (808) a location of a second mobile terminal of the second user;
- determining (819) a social network click-through rate, SNA CTR, of the selected content item based on the first user's social network including the at least one second user indicated by the contact information of the first user;
- determining a ranking of the content item in relation to other content items based on the social network click-through rate, SNA CTR, of the selected content item; and
- selectively initiating (820), if an intended presentation area for the selected content item covers the location of the second mobile terminal, a presentation of the selected content item to the second mobile terminal (128) depending on the ranking of the selected content item.

2. The method according to claim 1,
wherein the first user is a mobile subscriber (126) of the mobile communications network (100) and the user-related database comprises a subscriber-related database (206) associated with the mobile communications network.

3. The method according to claim 2,
wherein the subscriber-related database comprises a call data record database of the mobile communications network.

4. The method according to any one of the preceding claims,
wherein the user-related database comprises a community database containing user profiles of users of a social network separate from the mobile communications network.

5. The method according to any one of the preceding claims,
wherein the intended presentation area for the selected content item is selected from one of multiple overlapping areas with different geographical extensions.

6. The method according to claim 5,
wherein the overlapping areas comprise at least a micro area and a macro area, and the micro area has a smaller geographical extension than the macro area.

7. The method according to claim 6,
wherein content items intended for presentation in the micro area are cached in a local content repository (116) in a network portion (106) of the mobile communications network (100) associated with the micro area and content items intended for presentation in the macro area are cached in a central repository of the mobile communications network.

8. The method according to claim 7,
wherein the step of initiating the presentation of the selected content item comprises initiating retrieval of the selected content item from the local repository or central repository dependent on the intended presentation area of the selected content item.

9. The method according to any one of the preceding claims,
wherein the social network click-through rate, SNA CTR, of the selected content item is determined based on the number of second users SNAO, which have been presented with the selected content item and the number of second users, SNAC, which have been clicked on the selected content item.

10. The method according to an yone of the preceding claims,
comprising the step, performed by the provisioning server, of retrieving information related to the selected content items for determining the social network click-through rate from the local repository or central repository dependent on the intended presentation area of the selected content item.

11. The method according to any one of the preceding claims, further comprising the following steps performed by a content repository (116) adapted for a provisioning of content items to users (126, 128) in a predefined area (130) of a mobile communications network (100), the method performed by the content repository (116) comprising the following steps:

    - caching (1002) a content item with an intended presentation area overlapping with the predefined area;
    - storing (1004) an indication of the number of users, SNAO, to which the content item is presented in the predefined area;
    - storing (1006) an indication of the number of users, SNAC, which have selected the presented content item in the predefined area; and
    - providing (1008) the stored number indications for a determination of a cached content item click-through rate, SNA CTR, related to the predefined area.

12. The method according to any one of the preceding claims,
comprising the step, performed by the content repository, of retrieving information related to the selected content items for determining the social network click-through rate from the local repository or central repository dependent on the intended presentation area of the selected content item.

13. A computer readable medium having computer executable instructions, which when run on a provisioning server causes the provisioning server to perform the method according to any one of claims 1 to 10.

14. A provisioning server (114) adapted for controlling a provisioning of content items to users in a mobile communications network (100), comprising:

    - a reception component (202) adapted to receive an indication of a content item which has been selected by a first user via a first mobile terminal (126);
    - a retrieval component (204) adapted to retrieve, from a user-related database (206), contact information associated with the first user, wherein the contact information indicates at least one second user (128);

- a location determination component (208) adapted to determine a location of a second mobile terminal of the second user; and

- a selection component (210) adapted to determine a social network click-through rate, SNA CTR, of the selected content item based on the first user's social network including the at least one second user indicated by the contact information of the first user, and to determine a ranking of the content item in relation to other content items based on the social network click-through rate, SNA CTR, of the selected content item, and wherein

- the selection component (210) is adapted to selectively initiate, if an intended presentation area for the selected content item covers the location of the second mobile terminal, a presentation of the selected content item to the second mobile terminal (128), depending on the ranking of the selected content item.

15. The provisioning server according to claim 14, wherein the retrieval component (204) is adapted to retrieve the contact information from a subscriber-related database (206) associated with the mobile communications network.

16. The provisioning server according to claim 15, wherein the retrieval component (204) is adapted to retrieve the contact information from a call data record database of the mobile communications network.

17. The provisioning server according to any one of claims 14 to 16, wherein the selection component (210) is adapted to initiate retrieval of the selected content item from a local repository or a central repository dependent on the intended presentation area of the selected content item.

18. The provisioning server according to any one of claims 14 to 17, wherein the selection component (210) is adapted to retrieve information related to the selected content items for determining the social network click-through rate from a local repository or a central repository dependent on the intended presentation area of the selected content item.

19. A system comprising the provisioning server of any one of claims 14 to 18 and a content repository (116) adapted for a provisioning of content items to users (126, 128) in a predefined area (130) of a mobile communications network (100) comprising:

- a component (302) adapted to cache a content item with an intended presentation area overlapping with the predefined area;

- a component (304) adapted to store an indication of the number of users, SNAO, to which the content item is presented in the predefined area;

- a component (306) adapted to store an indication of the number of users, SNAC, clicking on the presented content item in the predefined area; and

- a component (308) adapted to provide the stored number indications for a determination of a cached content item click-through rate, SNA CTR, related to the predefined area.

**Patentansprüche**

1. Verfahren zum Steuern einer Bereitstellung von Inhaltselementen an Benutzer in einem mobilen Kommunikationsnetz, wobei das Verfahren von einem Bereitstellungsserver (114) in dem mobilen Kommunikationsnetz (100) ausgeführt wird und die folgenden Schritte umfasst:

- Empfangen (802) einer Angabe eines Inhaltselements, das von einem ersten Benutzer über ein erstes mobiles Endgerät (126) ausgewählt wurde;

- Abrufen (804) von Kontaktinformationen, die dem ersten Benutzer zugeordnet sind, aus einer benutzerbezogenen Datenbank (206), wobei die Kontaktinformationen wenigstens einen zweiten Benutzer (128) angeben;

- Bestimmen (808) einer Position eines zweiten mobilen Endgeräts des zweiten Benutzers;

- Bestimmen (819) einer Soziales-Netzwerk-Durchklickrate, SNA CTR, des ausgewählten Inhaltselements auf Grundlage des sozialen Netzwerks des ersten Benutzers, das den wenigstens einen zweiten Benutzer beinhaltet, der durch die Kontaktinformationen des ersten Benutzers angegeben wurde;

- Bestimmen eines Rangs des Inhaltselements im Verhältnis zu anderen Inhaltselementen auf Grundlage der Soziales-Netzwerk-Durchklickrate, SNA CTR, des ausgewählten Inhaltselements; und

- selektives Einleiten (820), wenn ein vorgesehener Präsentationsbereich für das ausgewählte Inhaltselement die Position des zweiten mobilen Endgeräts abdeckt, einer Präsentation des ausgewählten Inhaltselements an das zweite mobile Endgerät (128) abhängig von dem Rang des ausgewählten Inhaltselements.

2. Verfahren nach Anspruch 1, wobei der erste Benutzer ein mobiler Teilnehmer (126) des mobilen Kommunikationsnetzes (100) ist und die benutzerbezogene Datenbank eine teilnehmerbezogene Datenbank (206) umfasst, die dem mobilen Kommunikationsnetz zugeordnet ist.

3. Verfahren nach Anspruch 2,
wobei die teilnehmerbezogene Datenbank eine Anrufdatenaufzeichnungsdatenbank des mobilen Kommunikationsnetzes umfasst.

4. Verfahren nach einem der vorangehenden Ansprüche,
wobei die benutzerbezogene Datenbank eine Gemeinschaftsdatenbank umfasst, die Benutzerprofile von Benutzern eines sozialen Netzwerks gesondert von dem mobilen Kommunikationsnetz enthält.

5. Verfahren nach einem der vorangehenden Ansprüche,
wobei der vorgesehene Präsentationsbereich für das ausgewählte Inhaltselement aus einem von mehreren überlappenden Bereichen mit unterschiedlichen geografischen Ausdehnungen ausgewählt wird.

6. Verfahren nach Anspruch 5,
wobei die überlappenden Bereiche wenigstens einen Mikrobereich und einen Makrobereich umfassen und der Mikrobereich eine kleinere geografische Ausdehnung als der Makrobereich aufweist.

7. Verfahren nach Anspruch 6,
wobei Inhaltselemente, die für die Präsentation im Mikrobereich vorgesehen sind, in einem lokalen Inhaltsspeicher (116) in einem Netzabschnitt (106) des mobilen Kommunikationsnetzes (100), das dem Mikrobereich zugeordnet ist, zwischengespeichert werden, und Inhaltselemente, die für die Präsentation im Makrobereich vorgesehen sind, in einem zentralen Speicher des mobilen Kommunikationsnetzes zwischengespeichert werden.

8. Verfahren nach Anspruch 7,
wobei der Schritt des Einleitens der Präsentation des ausgewählten Inhaltselements Einleiten eines Abrufens des ausgewählten Inhaltselements aus dem lokalen Speicher oder zentralen Speicher abhängig von dem vorgesehenen Präsentationsbereich des ausgewählten Inhaltselements umfasst.

9. Verfahren nach einem der vorangehenden Ansprüche,
wobei die Soziales-Netzwerk-Durchklickrate, SNA CTR, des ausgewählten Inhaltselements auf Grundlage der Anzahl zweiter Benutzers, SNAO, denen das ausgewählte Inhaltselement präsentiert wurde, und der Anzahl zweiter Benutzers, SNAC, bestimmt wird, die auf das ausgewählte Inhaltselement geklickt haben.

10. Verfahren nach einem der vorangehenden Ansprüche,
umfassend den Schritt, ausgeführt von dem Bereitstellungsserver, des Abrufens von Informationen im Zusammenhang mit den ausgewählten Inhaltselementen zum Bestimmen der Soziales-Netzwerk-Durchklickrate aus dem lokalen Speicher oder zentralen Speicher abhängig von dem vorgesehenen Präsentationsbereich des ausgewählten Inhaltselements.

11. Verfahren nach einem der vorangehenden Ansprüche, ferner folgende Schritte umfassend, die von einem Inhaltsspeicher (116) ausgeführt werden, der für eine Bereitstellung von Inhaltselementen an Benutzer (126, 128) in einem vordefinierten Bereich (130) eines mobilen Kommunikationsnetzes (100) angepasst ist, wobei das von dem Inhaltsspeicher (116) ausgeführte Verfahren folgende Schritte umfasst:

- Zwischenspeichern (1002) eines Inhaltselements mit einem vorgesehenen Präsentationsbereich, der den vordefinierten Bereich überlappt;
- Speichern (1004) einer Angabe der Anzahl von Benutzern, SNAO, denen das Inhaltselement in dem vordefinierten Bereich präsentiert wird;
- Speichern (1006) einer Angabe der Anzahl von Benutzern, SNAC, die das präsentierte Inhaltselement in dem vordefinierten Bereich ausgewählt haben; und
- Bereitstellen (1008) der gespeicherten Angaben zur Anzahl für eine Bestimmung einer zwischengespeicherten Inhaltselement-Durchklickrate, SNA CTR, im Zusammenhang mit dem vordefinierten Bereich.

12. Verfahren nach einem der vorangehenden Ansprüche,
umfassend den Schritt, ausgeführt von dem Inhaltsspeicher, des Abrufens von Informationen im Zusammenhang mit den ausgewählten Inhaltselementen zum Bestimmen der Soziales-Netzwerk-Durchklickrate aus dem lokalen Speicher oder zentralen Speicher abhängig von dem vorgesehenen Präsentationsbereich des ausgewählten Inhaltselements.

13. Computerlesbares Medium mit von Computern ausführbaren Anweisungen, die bei Ausführung auf einem Bereitstellungsserver den Bereitstellungsserver veranlassen, das Verfahren nach einem der Ansprüche 1 bis 10 auszuführen.

14. Bereitstellungsserver (114), der zum Steuern einer Bereitstellung von Inhaltselementen an Benutzer in einem mobilen Kommunikationsnetz (100) angepasst ist, umfassend:

- eine Empfangskomponente (202), die dazu angepasst ist, eine Angabe eines Inhaltselements zu empfangen, das von einem ersten Benutzer über ein erstes mobiles Endgerät (126) ausgewählt wurde;

- eine Abrufkomponente (204), die dazu angepasst ist, aus einer benutzerbezogenen Datenbank (206), Kontaktinformationen abzurufen, die dem ersten Benutzer zugeordnet sind, wobei die Kontaktinformationen wenigstens einen zweiten Benutzer (128) angeben;

- eine Positionsbestimmungskomponente (208), die dazu angepasst ist, eine Position eines zweiten mobilen Endgeräts des zweiten Benutzers zu bestimmen; und

- eine Auswahlkomponente (210), die dazu angepasst ist, eine Soziales-Netzwerk-Durchklickrate, SNA CTR, des ausgewählten Inhaltselements auf Grundlage des sozialen Netzwerks des ersten Benutzers zu bestimmen, das den wenigstens einen zweiten Benutzer beinhaltet, der von den Kontaktinformationen des ersten Benutzer angegeben wird, und einen Rang des Inhaltselement im Verhältnis zu anderen Inhaltselementen auf Grundlage der Soziales-Netzwerk-Durchklickrate, SNA CTR, des ausgewählten Inhaltselements zu bestimmen, und wobei

- die Auswahlkomponente (210) dazu angepasst ist, wenn ein vorgesehener Präsentationsbereich für das ausgewählte Inhaltselement die Position des zweiten mobilen Endgeräts abdeckt, selektiv eine Präsentation des ausgewählten Inhaltselements an das zweite mobile Endgerät (128) abhängig von dem Rang des ausgewählten Inhaltselements einzuleiten.

15. Bereitstellungsserver nach Anspruch 14, wobei die Abrufkomponente (204) dazu angepasst ist, die Kontaktinformationen aus einer teilnehmerbezogenen Datenbank (206) abzurufen, die dem mobilen Kommunikationsnetz zugeordnet ist.

16. Bereitstellungsserver nach Anspruch 15, wobei die Abrufkomponente (204) dazu angepasst ist, die Kontaktinformationen aus einer Anrufdatenaufzeichnungsdatenbank des mobilen Kommunikationsnetzes abzurufen.

17. Bereitstellungsserver nach einem der Ansprüche 14 bis 16, wobei die Auswahlkomponente (210) dazu angepasst ist, das Abrufen des ausgewählten Inhaltselements abhängig von dem vorgesehenen Präsentationsbereich des ausgewählten Inhaltselements aus einem lokalen Speicher oder einem zentralen Speicher einzuleiten.

18. Bereitstellungsserver nach einem der Ansprüche 14 bis 17, wobei die Auswahlkomponente (210) dazu angepasst ist, abhängig von dem vorgesehenen Präsentationsbereich des ausgewählten Inhaltselements Informationen im Zusammenhang mit den ausgewählten Inhaltselementen zum Bestimmen der Soziales-Netzwerk-Durchklickrate aus einem lokalen Speicher oder einem zentralen Speicher abzurufen.

19. System, umfassend den Bereitstellungsserver nach einem der Ansprüche 14 bis 18 und einen Inhaltsspeicher (116), der für eine Bereitstellung von Inhaltselementen an Benutzer (126, 128) in einem vordefinierten Bereich (130) eines mobilen Kommunikationsnetzes (100) angepasst ist, umfassend:

- eine Komponente (302), die dazu angepasst ist, ein Inhaltselement mit einem vorgesehenen Präsentationsbereich, der den vordefinierten Bereich überlappt, zwischenzuspeichern;

- eine Komponente (304), die dazu angepasst ist, eine Angabe der Anzahl von Benutzern, SNAO, zu speichern, denen das Inhaltselement in dem vordefinierten Bereich präsentiert wird;

- eine Komponente (306), die dazu angepasst ist, eine Angabe der Anzahl von Benutzern, SNAC, zu speichern, die auf das präsentierte Inhaltselement in dem vordefinierten Bereich klickt; und

- eine Komponente (308), die dazu angepasst ist, die gespeicherten Angaben zur Anzahl für eine Bestimmung einer zwischengespeicherten Inhaltselement-Durchklickrate, SNA CTR, im Zusammenhang mit dem vordefinierten Bereich bereitzustellen.

**Revendications**

1. Procédé de contrôle d'un approvisionnement en éléments de contenu des utilisateurs dans un réseau de communication mobile, le procédé étant exécuté par un serveur d'approvisionnement (114) dans le réseau de communication mobile (100) et comprenant les étapes suivantes :

- réception (802) d'une indication d'un élément de contenu qui a été sélectionné par un premier utilisateur par l'intermédiaire d'un premier terminal mobile (126) ;

- récupération (804), à partir d'une base de données associée à l'utilisateur (206) des informations de contact associées au premier utilisateur, dans lequel les informations de contact indiquent au moins un second utilisateur (128) ;

- détermination (808) d'une localisation d'un second terminal mobile du second utilisateur ;

- détermination (819) d'un taux de clics au sein du réseau social, SNA CTR, de l'élément de contenu sélectionné en se fondant sur le réseau social du premier utilisateur incluant ledit au moins un second utilisateur indiqué par les informations de contact du premier utilisateur ;
- détermination d'un classement de l'élément de contenu par rapport aux autres éléments de contenu en se fondant sur le taux de clics au sein du réseau social, SNA CTR, de l'élément de contenu sélectionné ; et
- déclenchement sélectif (820), si une zone de présentation prévue pour l'élément de contenu sélectionné couvre la localisation du second terminal mobile, d'une présentation de l'élément de contenu sélectionné sur le second terminal mobile (128) en fonction du classement de l'élément de contenu sélectionné.

2. Procédé selon la revendication 1, dans lequel le premier utilisateur est un abonné mobile (126) du réseau de communication mobile (100) et la base de données associée à l'utilisateur comprend une base de données associée à l'abonné (206) associée au réseau de communication mobile.

3. Procédé selon la revendication 2, dans lequel la base de données associée à l'abonné comprend une base de données d'enregistrements de données d'appels du réseau de communication mobile.

4. Procédé selon l'une quelconque des revendications précédentes, dans lequel la base de données associée à l'utilisateur comprend une base de données communautaire contenant les profils d'utilisateur des utilisateurs d'un réseau social distinct du réseau de communication mobile.

5. Procédé selon l'une quelconque des revendications précédentes, dans lequel la zone de présentation prévue pour l'élément de contenu sélectionné est sélectionnée parmi l'une des multiples zones chevauchantes avec différentes extensions géographiques.

6. Procédé selon la revendication 5, dans lequel les zones chevauchantes comprennent au moins une micro zone et une macro zone, et la micro zone possède une extension géographique plus courte que la macro zone.

7. Procédé selon la revendication 6, dans lequel les éléments de contenu destinés à la présentation dans la micro zone sont mis en cache dans un référentiel de contenu local (116) dans une partie de réseau (106) du réseau de communication mobile (100) associé à la micro zone et les éléments de contenu destinés à la présentation dans la macro zone sont mis en cache dans un référentiel central du réseau de communication mobile.

8. Procédé selon la revendication 7, dans lequel l'étape de déclenchement de la présentation de l'élément de contenu sélectionné comprend le déclenchement de la récupération de l'élément de contenu sélectionné à partir du référentiel local ou du référentiel central en fonction de la zone de présentation prévue de l'élément de contenu sélectionné.

9. Procédé selon l'une quelconque des revendications précédentes, dans lequel le taux de clics au sein du réseau social, SNA CTR, de l'élément de contenu sélectionné est déterminé en se fondant sur le nombre de seconds utilisateurs, SNAO, à qui l'élément de contenu sélectionné a été présenté et le nombre de seconds utilisateurs, SNAC, qui ont cliqué sur l'élément de contenu sélectionné.

10. Procédé selon l'une quelconque des revendications précédentes, comprenant l'étape, exécutée par le serveur d'approvisionnement, de récupération des informations associées aux éléments de contenu sélectionnés pour déterminer le taux de clics au sein du réseau social à partir du référentiel local ou du référentiel central en fonction de la zone de présentation prévue de l'élément de contenu sélectionné.

11. Procédé selon l'une quelconque des revendications précédentes, comprenant en outre les étapes suivantes exécutées par un référentiel de contenu (116) conçu pour un approvisionnement en éléments de contenu des utilisateurs (126, 128) dans une zone prédéfinie (130) d'un réseau de communication mobile (100), le procédé exécuté par le référentiel de contenu (116) comprenant les étapes suivantes :

- mise en cache (1002) d'un élément de contenu avec une zone de présentation prévue chevauchant sur la zone prédéfinie ;
- enregistrement (1004) d'une indication du nombre d'utilisateurs, SNAO, auxquels l'élément de contenu est présenté dans la zone prédéfinie ;
- enregistrement (1006) d'une indication du nombre d'utilisateurs, SNAC, qui ont sélectionné l'élément de contenu présenté dans la zone prédéfinie ; et
- fourniture (1008) des indications sur les nombres enregistrés pour une détermination d'un taux de clics de l'élément de contenu mis en cache, SNA CTR, associé à la zone prédéfinie.

12. Procédé selon l'une quelconque des revendications précédentes, comprenant l'étape, exécutée par le référentiel de contenu, de récupération des informations associées aux éléments de contenu sélectionnés pour déterminer le taux de clics au sein du réseau social à partir du référentiel local ou du référentiel central en fonction de la zone de présentation prévue de l'élément de contenu sélectionné.

13. Support lisible par ordinateur contenant des instructions exécutables par ordinateur, qui, lorsqu'elles sont exécutées sur un serveur d'approvisionnement, commandent au serveur d'approvisionnement d'exécuter le procédé selon l'une quelconque des revendications 1 à 10.

14. Serveur d'approvisionnement (114) conçu pour contrôler un approvisionnement en éléments de contenu des utilisateurs dans un réseau de communication mobile (100), comprenant :

    - un composant de réception (202) conçu pour recevoir une indication d'un élément de contenu qui a été sélectionné par un premier utilisateur par l'intermédiaire d'un premier terminal mobile (126) ;
    - un composant de récupération (204) conçu pour récupérer, à partir d'une base de données associée à l'utilisateur (206), les informations de contact associées au premier utilisateur, dans lequel les informations de contact indiquent au moins un second utilisateur (128) ;
    - un composant de détermination de la localisation (208) conçu pour déterminer une localisation d'un second terminal mobile du second utilisateur ; et
    - un composant de sélection (210) conçu pour déterminer un taux de clics au sein du réseau social, SNA CTR, de l'élément de contenu sélectionné en se fondant sur le réseau social du premier utilisateur incluant ledit au moins un second utilisateur indiqué par les informations de contact du premier utilisateur, et pour déterminer un classement de l'élément de contenu par rapport aux autres éléments de contenu en se fondant sur le taux de clics au sein du réseau social, SNA CTR, de l'élément de contenu sélectionné, et dans lequel
    - le composant de sélection (210) est conçu pour déclencher sélectivement, si une zone de présentation prévue pour l'élément de contenu sélectionné couvre la localisation du second terminal mobile, une présentation de l'élément de contenu sélectionné sur le second terminal mobile (128), en fonction du classement de l'élément de contenu sélectionné.

15. Serveur d'approvisionnement selon la revendication 14, dans lequel le composant de récupération (204) est conçu pour récupérer les informations de contact à partir d'une base de données associée à l'abonné (206) associée au réseau de communication mobile.

16. Serveur d'approvisionnement selon la revendication 15, dans lequel le composant de récupération (204) est conçu pour récupérer les informations de contact à partir d'une base de données d'enregistrements de données d'appels du réseau de communication mobile.

17. Serveur d'approvisionnement selon l'une quelconque des revendications 14 à 16, dans lequel le composant de sélection (210) est conçu pour déclencher la récupération de l'élément de contenu sélectionné à partir d'un référentiel local ou d'un référentiel central en fonction de la zone de présentation prévue de l'élément de contenu sélectionné.

18. Serveur d'approvisionnement selon l'une quelconque des revendications 14 à 17, dans lequel le composant de sélection (210) est conçu pour récupérer les informations associées aux éléments de contenu sélectionnés pour déterminer le taux de clics au sein du réseau social à partir d'un référentiel local ou d'un référentiel central en fonction de la zone de présentation prévue de l'élément de contenu sélectionné.

19. Système comprenant le serveur d'approvisionnement selon l'une quelconque des revendications 14 à 18 et un référentiel de contenu (116) conçu pour un approvisionnement en éléments de contenu des utilisateurs (126, 128) dans une zone prédéfinie (130) d'un réseau de communication mobile (100) comprenant :

    - un composant (302) conçu pour mettre en cache un élément de contenu avec une zone de présentation prévue chevauchant sur la zone prédéfinie ;
    - un composant (304) conçu pour enregistrer une indication du nombre d'utilisateurs, SNAO, auxquels l'élément de contenu est présenté dans la zone prédéfinie ;
    - un composant (306) conçu pour enregistrer une indication du nombre d'utilisateurs, SNAC, cliquant sur l'élément de contenu présenté dans la zone prédéfinie ; et
    - un composant (308) conçu pour fournir les indications sur les nombres enregistrés pour une détermination d'un taux de clics de l'élément de contenu mis en cache, SNA CTR, associé à la zone prédéfinie.

Fig. 1

Fig. 2

Fig. 3

**Mobile Communications Network 100**

| Social Network 402 | Internet Content 404 | Advertisments 406 |
|---|---|---|

408

Internet Content [direct]

Macro-Localised Adverts 412

416

Subscribers Social Network

410

Internet Content [cached]

414

Micro-Localised Adverts

*Localisation*

Social Network & Location Advertisement Generator

114

126, 128

Subscribers

Fig. 4

504 — { >>> IXTRON Inc. <<<

502 —
1 News
2 Sport
3 Business
4 Entertainment
5 RTE Aertel
6 Weather
7 Lotto

Useful Mobile Sites
  My Weather
  MyHome.ie
  Wapedia
  Google

Get RTE text alerts

© RTE 2008 T&C

500

Fig. 5

Fig. 6

702

Input URL base

[URL base]

704

No

Is [URL base] participating in social network and location based advertisement program ?

Yes

Select, Present and Monitor Advertisement

Fig. 8

706

Fig. 7

Fig. 8

Input clicked ad — 802

[Ad, Subscriber, Social network]

Increment SNAC ----- Update content repository — 803

[Ad, Subscriber, Social network, Location, Time]

Query Social Network of [Subscriber] — 804

If [subscriber] contacts >= 1 — No

Yes

806

For each contact of [subscriber] social network

Retrieve Location of Social network contact — 808

[Ad, location]

Is [Ad] macro-localized ? — 812

No

Is [Ad] micro-localized ? — 810

No

Yes

Yes

816

Add [Advertisement] to array of possible advertisement options — 818

Yes

Is social network contact within micro area ? — 814

No

No

Yes

Is social network contact within macro area ?

Select advertisement to present to subscriber based on SNA CTR — 819

820

Present ad to subscriber ----- Increment SNAO

Fig. 9

Support provisioning of content
items in predefined area

1002

Cache content item with intended presentation
area overlapping with predefined area

1004

Store indication of number of users to which the
content item is presented in the predefined area

1006

Store indication of number of users having selected
the presented content item in the predefined area

1008

Provide stored number indications for click-through
rate determination related to the predefined area

**Fig. 10**

**EP 2 350 947 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008214428 A

- US 2006282328 A